(19) Europäisches Patentamt
European Patent Office
Office européen des brevets

(11) **EP 4 439 121 B1**

(12) **EUROPEAN PATENT SPECIFICATION**

(45) Date of publication and mention of the grant of the patent:
**19.08.2026 Bulletin 2026/34**

(21) Application number: **21968561.7**

(22) Date of filing: **22.12.2021**

(51) International Patent Classification (IPC):
***G01S 13/86*** *(2006.01)* ***G01S 13/58*** *(2006.01)*
***G06F 18/40*** *(2023.01)* ***G06V 10/764*** *(2022.01)*
***G06V 10/766*** *(2022.01)* ***G06V 10/77*** *(2022.01)*
***G06V 20/58*** *(2022.01)* ***G06V 20/64*** *(2022.01)*

(52) Cooperative Patent Classification (CPC):
**G06V 20/58; G01S 7/411; G01S 13/42; G01S 13/582; G01S 13/584; G01S 13/91; G06V 10/764; G06V 10/766; G06V 10/77; G06V 20/64;** G06V 2201/07; G06V 2201/08

(86) International application number:
**PCT/CN2021/140600**

(87) International publication number:
**WO 2023/115412 (29.06.2023 Gazette 2023/26)**

(54) **TARGET RECOGNITION METHOD AND DEVICE**

ZIELERKENNUNGSVERFAHREN UND -VORRICHTUNG

PROCÉDÉ ET DISPOSITIF DE RECONNAISSANCE DE CIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.10.2024 Bulletin 2024/40**

(73) Proprietor: **Yinwang Intelligent Technologies Co., Ltd.**
**Shenzhen, Guangdong 518129 (CN)**

(72) Inventor: **HU, Bingtao**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
**CN-A- 111 226 132**
**CN-A- 112 789 672**
**CN-A- 113 191 459**
**CN-A- 113 359 097**
**CN-A- 113 447 923**
**US-A1- 2022 050 461**
**US-B1- 11 002 859**

- **ASENSIO LOPEZ ALBERTO ET AL: "On the Use of Glint-Doppler-Azimuth Correlation for Speed Estimation of Nearby Tangential Targets", IEEE TRANSACTIONS ON INTELLIGENT TRANSPORTATION SYSTEMS, IEEE, PISCATAWAY, NJ, USA, vol. 21, no. 11, 7 November 2019 (2019-11-07), pages 4912 - 4918, XP011818714, ISSN: 1524-9050, [retrieved on 20201030], DOI: 10.1109/TITS.2019.2950522**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### TECHNICAL FIELD

This application relates to the field of intelligent transportation, and in particular, to a target recognition method and apparatus.

### BACKGROUND

As science and technology develop and progress, intelligent transportation has gradually become a research hotspot. For example, in the conventional technology, a plurality of types of sensors (for example, a lidar, a millimeter-wave radar, and an ultrasonic sensor) are installed on a vehicle or a road, and a road condition and environment information around the vehicle or the road are recognized by the sensors, to assist driving of the vehicle based on the road condition and the environment information.

In a known technology, a target recognition method of a sensor is as follows: The sensor sends a detection signal to the outside, receives a reflected signal reflected by a target, processes the reflected signal, to extract a feature (like a distance width, a speed width, one-dimensional range profile, or two-dimensional entropy) of the target, and then classify and recognize the target based on the feature of the target.

However, a method for extracting a feature of a target in the conventional technology has poor reliability, and consequently accuracy of target recognition is low. Asensio Lopez Alberto et al: "On the Use of Glint-Doppler-Azimuth Correlation for Speed Estimation of Nearby Tangential Targets", IEEE Transactions on intelligent transportation systems, vo. 21, no. 11, 7 November 2019, pages 4912-4918, proposes estimating the speed of nearby tangential targets by using Glint-Doppler-azimuth correlation. From US 2022/050461 A1, a navigation program is known that is configured to: receive an initial model of an object to be inspected by the autonomous vehicle; identify an inspection target associated with the initial model of the object; and determine an inspection location for the autonomous vehicle from which inspection target is inspectable by an inspection system of the autonomous vehicle, wherein the initial model includes one or more convex shapes representing the object.

### SUMMARY

The present invention is defined by the independent claims. Particular embodiments are specified in the dependent claims. This application further provides a target recognition method and apparatus, to improve accuracy of target recognition.

According to a first aspect, a target recognition method is provided. The method includes: obtaining first point cloud data; decomposing the first point cloud data into a first direction, to obtain first data; and determining a type of a target based on the first data.

The first direction is a movement direction of the target, or the first direction is opposite to a movement direction of the target, or the first direction is perpendicular to a movement direction of the target. Obtaining first point cloud data comprises: transmitting, by a sensor, a signal to the outside, receiving, by the sensor, a reflection, by the target, of the transmitted signal to form a reflected signal, and processing, by the sensor, the reflected signal received by the sensor, to obtain the point cloud data. Decomposing the location of each detection point comprises mapping the first point cloud data to the first direction, and determining a corresponding projection point for each detection point in the first direction.

In the foregoing solution, the first data obtained by decomposing the first point cloud data into the first direction may reflect distribution of the first point cloud data in the first direction, so that a feature of the target can be extracted from the first direction. This helps improve accuracy of target recognition.

In this implementation, the first point cloud data may be decomposed into the movement direction of the target or a direction opposite to the movement direction of the target, and the feature of the target may be extracted from a dimension of the movement direction of the target, so that the extracted feature does not change with the movement direction of the target, impact of the movement direction of the target on target recognition can be reduced or eliminated, and accuracy of the target recognition can be improved.

In a possible implementation, the first point cloud data includes a location of at least one detection point of the target.

In this implementation, the location of the at least one detection point of the target may be decomposed into the first direction, to obtain a distribution status of detection points of the target in the first direction, and provide feature reference for target recognition. For example, distribution of vehicles in a movement direction may accurately describe length features of the vehicles, so that types of the vehicles may be recognized based on lengths of the vehicles.

In a possible implementation, the location of the at least one detection point includes coordinates of each detection point in the at least one detection point in a radar coordinate system; and the decomposing the first point cloud

data into a first direction includes: projecting the coordinates of each detection point in the at least one detection point in the radar coordinate system onto a first coordinate system, to obtain projection coordinates of each detection point in the first coordinate system.

In this implementation, the first point cloud data is decomposed into the first direction through coordinate projection, so that data processing efficiency can be improved, and target recognition efficiency is further improved.

In a possible implementation, a positive direction of a first coordinate axis of the first coordinate system is the same as or opposite to the first direction, and an origin of the first coordinate system is a geometric center, a centroid, an energy center, or an energy centroid of the target.

It should be understood that the foregoing origin locations of the first coordinate system are merely examples but not limitations.

It may be understood that, in a moving process of the target, the first coordinate system may be unchanged relative to the target. However, in the moving process of the target, a location of the first coordinate system in a world coordinate system changes with change of a location of the target in the world coordinate system.

In a possible implementation, the first point cloud data further includes a first preset feature of each detection point in the at least one detection point, and the first preset feature includes one or more of radar cross section, energy, or a speed.

It should be understood that the foregoing several first preset features are merely examples but not limitations.

In a possible implementation, the decomposing the first point cloud data into a first direction further includes: projecting the first preset feature of each detection point onto the first coordinate system based on the projection coordinates of each detection point in the first coordinate system.

In this implementation, a distribution status of the first preset features of detection points of the target in the first direction may be obtained, to provide feature reference for target recognition, and further improve accuracy of target recognition.

In a possible implementation, projection coordinates of a first detection point in the at least one detection point in the first coordinate system fall on a first scale of a first coordinate axis; and the projecting the first preset feature of each detection point onto the first coordinate system based on the projection coordinates of each detection point in the first coordinate system includes: projecting a first preset feature of the first detection point onto the first scale.

In a possible implementation, projection coordinates of a second detection point in the at least one detection point in the first coordinate system fall between a second scale and a third scale of a first coordinate axis; and the projecting the first preset feature of each detection point onto the first coordinate system based on the projection coordinates of each detection point in the first coordinate system includes: projecting a first preset feature of the second detection point onto a scale that is of the second scale and the third scale and that is closer to the projection coordinates of the second detection point in the first coordinate system; or determining, based on a distance between each of at least two scales on the first coordinate axis and the projection coordinates of the second detection point in the first coordinate system, a weighting coefficient corresponding to each scale, where the at least two scales include the second scale and the third scale, and the weighting coefficient corresponding to each scale is negatively correlated with the distance between each scale and the projection coordinates of the second detection point in the first coordinate system; weighting a first preset feature of the second detection point based on the weighting coefficient corresponding to each scale; and projecting a weighted first preset feature of the second detection point onto each scale.

In the foregoing two implementations, the first preset feature of each detection point may be projected onto the scale of the first coordinate axis of the first coordinate system. This facilitates subsequent statistics on a quantity of first preset features that are of points in the first coordinate system and that are accumulatively projected, and helps standardize or quantify data processing.

In a possible implementation, the determining a type of a target based on the first data includes: determining a second preset feature of the target based on the first data, where the second preset feature includes one or more of a distance width, a speed width, one-dimensional range profile, or two-dimensional entropy; and determining the type of the target based on the second preset feature.

In this implementation, the second preset feature of the target can be extracted from a dimension in which the first direction is located, to improve accuracy of target recognition.

In a possible implementation, the method further includes: obtaining second point cloud data; and decomposing the second point cloud data into the first direction, to obtain second data; and the determining a type of a target based on the first data includes: determining the type of the target based on the first data and the second data. Collection time of the first point cloud data is different from collection time of the second point cloud data. For example, the first point cloud data and the second point cloud data are two frames of point cloud data that are sequentially collected by a sensor.

In this implementation, the feature of the target can be extracted based on a decomposition result of multi-frame point cloud data in the first direction, and impact of factors such as change of a movement direction of the target and inter-frame fluctuation of the feature can be reduced or eliminated, to further improve accuracy of target recognition.

According to a second aspect, a target recognition apparatus is provided. The apparatus includes a module/u-

nit/technological means for performing the method in the first aspect or any possible implementation of the first aspect.

In a possible implementation, the apparatus includes an obtaining module and a processing module. The obtaining module is configured to obtain first point cloud data. The processing module is configured to: decompose the first point cloud data into a first direction, to obtain first data; and determine a type of a target based on the first data.

In a possible implementation, the first direction is a movement direction of the target, or the first direction is opposite to a movement direction of the target.

In a possible implementation, the first point cloud data includes a location of at least one detection point of the target.

In a possible implementation, the location of the at least one detection point includes coordinates of each detection point in the at least one detection point in a radar coordinate system; and when decomposing the first point cloud data into the first direction, the processing module is configured to: project the coordinates of each detection point in the at least one detection point in the radar coordinate system onto a first coordinate system, to obtain projection coordinates of each detection point in the first coordinate system.

In a possible implementation, a positive direction of a first coordinate axis of the first coordinate system is the same as or opposite to the first direction, and an origin of the first coordinate system is a geometric center, a centroid, an energy center, or an energy centroid of the target.

In a possible implementation, the first point cloud data further includes a first preset feature of each detection point in the at least one detection point, and the first preset feature includes one or more of radar cross section, energy, or a speed.

In a possible implementation, the processing module is further configured to: project the first preset feature of each detection point onto the first coordinate system based on the projection coordinates of each detection point in the first coordinate system.

In a possible implementation, projection coordinates of a first detection point in the at least one detection point in the first coordinate system fall on a first scale of a first coordinate axis; and when projecting the first preset feature of each detection point onto the first coordinate system based on the projection coordinates of each detection point in the first coordinate system, the processing module is specifically configured to: project a first preset feature of the first detection point onto the first scale.

In a possible implementation, projection coordinates of a second detection point in the at least one detection point in the first coordinate system fall between a second scale and a third scale of a first coordinate axis; and when projecting the first preset feature of each detection point onto the first coordinate system based on the projection coordinates of each detection point in the first coordinate system, the processing module is specifically configured to: project a first preset feature of the second detection point onto a scale that is of the second scale and the third scale and that is closer to the projection coordinates of the second detection point in the first coordinate system; or determine, based on a distance between each of at least two scales on the first coordinate axis and the projection coordinates of the second detection point in the first coordinate system, a weighting coefficient corresponding to each scale, where the at least two scales include the second scale and the third scale, and the weighting coefficient corresponding to each scale is negatively correlated with the distance between each scale and the projection coordinates of the second detection point in the first coordinate system; weight a first preset feature of the second detection point based on the weighting coefficient corresponding to each scale; and project a weighted first preset feature of the second detection point onto each scale.

In a possible implementation, when determining the type of the target based on the first data, the processing module is configured to: determine a second preset feature of the target based on the first data, where the second preset feature includes one or more of a distance width, a speed width, one-dimensional range profile, or two-dimensional entropy; and determine the type of the target based on the second preset feature.

In a possible implementation, the obtaining module is further configured to: obtain second point cloud data; and decompose the second point cloud data into the first direction, to obtain second data, where collection time of the first point cloud data is different from collection time of the second point cloud data; and the processing module is further configured to determine the type of the target based on the first data and the second data.

According to a third aspect, a target recognition apparatus is provided, including a processor and an interface circuit. The interface circuit is configured to: receive a signal from another apparatus other than the apparatus and transmit the signal to the processor, or send a signal from the processor to another communication apparatus other than the apparatus. The processor is configured to implement the method according to the first aspect or any possible implementation of the first aspect by using a logic circuit or executing code instructions.

According to a fourth aspect, a computer-readable storage medium is provided, including a program or instructions. When the program or instructions are run on a computer, the method according to the first aspect or any possible implementation of the first aspect is performed.

According to a fifth aspect, a program product is provided, including instructions. When the instructions are run on a computer, the method according to the first aspect or any possible implementation of the first aspect is performed.

According to a sixth aspect, a terminal is provided, including the apparatus according to the second aspect or any

possible implementation of the second aspect, or the apparatus according to the third aspect, or the computer-readable storage medium according to the fourth aspect, or the program product according to the fifth aspect.

Optionally, the terminal is a vehicle.

## BRIEF DESCRIPTION OF DRAWINGS

FIG. 1 is a possible target recognition scenario according to an embodiment of this application;
FIG. 2 is a schematic diagram of a method for recognizing a distance width of a vehicle;
FIG. 3 is a flowchart of a target recognition method according to an embodiment of this application;
FIG. 4A and FIG. 4B are schematic diagrams of a radar coordinate system;
FIG. 5A, FIG. 5B, and FIG. 5C are schematic diagrams of coordinate projection;
FIG. 6 is a schematic diagram of projection of a first preset feature;
FIG. 7A is a comparison diagram of one-dimensional rcs distribution of a truck, a bus, and a car;
FIG. 7B is a comparison diagram of rcs distribution entropy of a truck, a bus, and a car;
FIG. 8A is a comparison diagram of one-dimensional rcs distribution of a car, a pedestrian, and a motorcycle;
FIG. 8B is a comparison diagram of a standard deviation of time domain fluctuation of a car, a pedestrian, and a motorcycle;
FIG. 9 is a schematic diagram of a structure of a target recognition apparatus according to an embodiment of this application; and
FIG. 10 is a schematic diagram of another structure of a target recognition apparatus according to an embodiment of this application.

## DESCRIPTION OF EMBODIMENTS

This application may be applied to various types of target recognition scenarios.

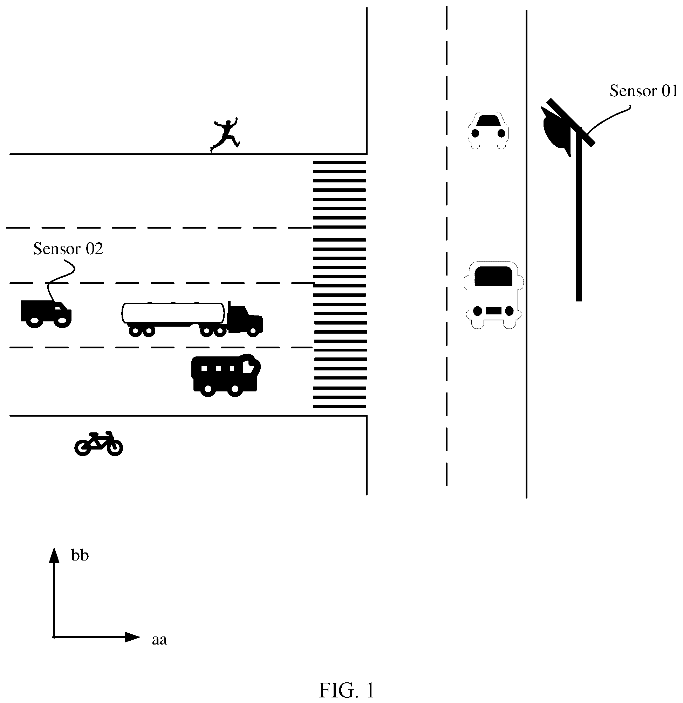

For example, FIG. 1 is a possible target recognition scenario according to an embodiment of this application. The scenario shown in FIG. 1 is a traffic scenario, and the traffic scenario includes at least one sensor. It may be understood that a type of the sensor in this application includes but is not limited to a lidar, a millimeter-wave radar, an ultrasonic sensor, and the like. In FIG. 1, a sensor 01 and a sensor 02 are used as an example. The sensor 01 is disposed on a roadside, the sensor 02 is disposed on transportation, and the transportation is, for example, a vehicle. A type of the sensor 01 may be the same as or different from a type of the sensor 02. This is not limited in this application.

The sensor may transmit a detection signal to the outside and receive a reflected signal returned from the outside. Further, if a processor is disposed in these sensors, these sensors may further process reflected signals to obtain a feature of a target, recognize a type of the target based on the feature of the target, and the like. The target may be any object in the scenario, for example, a vehicle, a pedestrian, a green plant, a building, or an obstacle. This is not limited in this application.

Certainly, the reflected signal may also be processed by another device, for example, another device that is communicated with the sensor, for example, a backend server of the sensor 01, or a computing device (like a CPU or an MCU) on a vehicle on which the sensor 02 is located. This is not limited in this application.

For ease of description, an example in which the sensor processes the reflected signal is used in this specification.

A millimeter-wave radar is used as an example. The millimeter-wave radar uses a millimeter-wave as a detection medium, may measure a distance, an angle, a relative velocity, and the like between the millimeter-wave radar and a detection point, and may further measure radar cross section, energy, and the like of each detection point. It should be understood that there may be a plurality of detection points on one target. The millimeter-wave radar can obtain a feature of the target by collecting statistics on measurement information corresponding to the plurality of detection points on the target. Table 1 lists several types of features commonly used in target recognition.

**Table 1**

| | |
|---|---|
| Average distance | Speed width |
| Average speed | Peak speed |
| Angle | Energy density |
| A quantity of scattering points | Two-dimensional entropy |
| Distance width | One-dimensional range profile |

The average distance is an average of distances of all detection points of the target; the average speed is an average of speeds of all detection points of the target; the quantity of scattering points is a quantity of detection points of the target; the distance width is a difference between a maximum value and a minimum value of distances of detection points of the target; the speed width is a difference between a maximum value and a minimum value of speeds of detection points of the target; the peak speed is a speed of a detection point with maximum energy in detection points of the target; the energy density is a sum of energy of detection points of the target divided by a quantity of detection points; the two-dimensional entropy is information entropy of a distance-speed spectrum corresponding to a distance-speed region in which the target is located; and the one-dimensional range profile is energy distribution of the target in a distance dimension.

In specific application, when a target moves along different directions, a feature (like a distance width, a speed width, one-dimensional range profile, or two-dimensional entropy) of the target varies greatly, resulting in poor accuracy of target recognition.

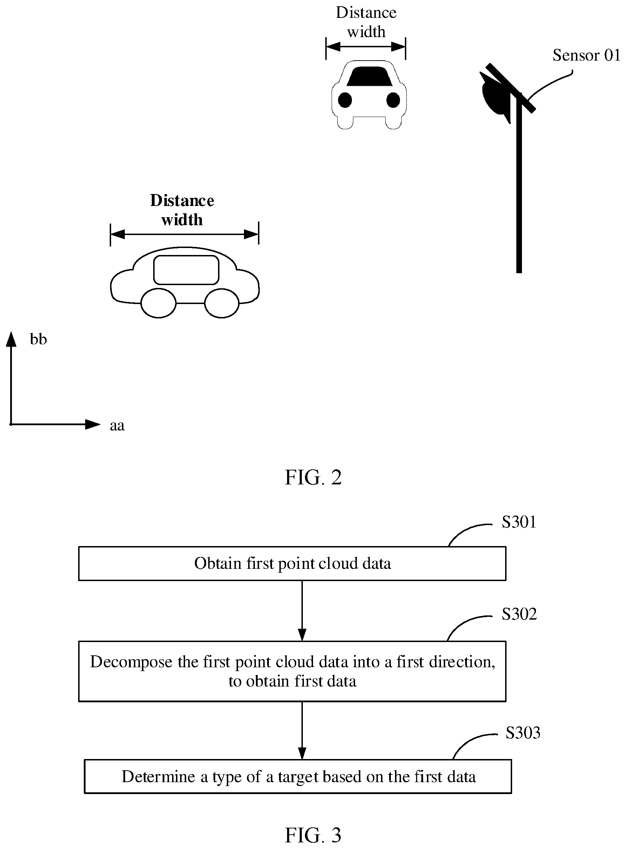

FIG. 1 is used as an example. The sensor 01 recognizes a distance width of the vehicle, and uses the distance width as a length of the vehicle, to recognize a type of the vehicle (for example, a bicycle, a car, or a bus, each corresponding to a different length range). Refer to FIG. 2. For a vehicle moving along a direction aa, a distance width measured by a sensor 01 can be close to a length of the vehicle. For a vehicle moving along a direction bb, a distance width measured by the sensor 01 is far from the length of the vehicle. If the distance width is still used as the length of the vehicle, an output target recognition result is incorrect. Especially in a turning process of the vehicle, for example, in a process in which a traveling direction of the vehicle switches from the aa direction to the bb direction, a distance width of the vehicle detected by the sensor 01 dynamically changes. Reliability of an extracted feature is poorer, and a type of the vehicle is more difficult to be accurately recognized.

In view of this, the technical solution in this embodiment of this application is provided, to reduce or eliminate impact of a movement direction of the target on target recognition, and improve accuracy of the target recognition.

It may be understood that a traffic scenario (for example, the scenario shown in FIG. 1) is used as an example in embodiments of this application, but this is not limited to that this application may be applied to another scenario, for example, a scenario like intelligent transportation, a smart home, intelligent manufacturing, or an uncrewed aerial vehicle. This application is applied to all scenarios in which a sensor is used to perform target recognition.

FIG. 3 is a flowchart of a target recognition method according to an embodiment of this application. An example in which the method is applied to the scenario shown in FIG. 1 is used. The method includes the following steps.

S301: A sensor obtains first point cloud data.

Specifically, the sensor transmits a signal to the outside, and the transmitted signal is reflected by a target, to form a reflected signal. Correspondingly, the sensor receives the reflected signal, and the sensor processes the reflected signal received by the sensor, to obtain point cloud data (Point Cloud Data).

The sensor may be disposed on a vehicle, for example, may be the sensor 02 shown in FIG. 1. Alternatively, the sensor may be disposed on a roadside, for example, may be the sensor 02 shown in FIG. 1. This is not limited in this application. A type of the sensor may be a millimeter-wave radar, a lidar, an ultrasonic radar, or the like. This is not limited in this application. Correspondingly, a detection signal transmitted by the sensor may be a millimeter wave, a laser, an ultrasonic wave, or the like. This depends on the type of the sensor.

In this embodiment of this application, a point (namely, a reflection point) of the reflected signal on a surface of the target may be referred to as a detection point, a sampling point, a feature point, or the like. For ease of description, the following uses the detection point as an example.

Generally, there may be a plurality of detection points on a surface of one object. The point cloud data may be a set of data of detection points detected by the sensor on the surface of the target. Further, first point cloud data may be point cloud data obtained by the sensor within a period of time. For example, the point cloud data obtained by the sensor in one scan is one frame of point cloud data. The first point cloud data may be one frame of point cloud data.

In this embodiment of this application, that the sensor processes the reflected signal received by the sensor may include: obtaining, based on information like a Doppler frequency shift and a difference between time of the transmitted signal and the reflected signal that correspond to the detection point, location information corresponding to the detection point. Correspondingly, the first point cloud data may include a location of at least one detection point of the target.

In a possible design, a location of the detection point may be indicated in one or more of the following manners:

(1) a distance between the detection point and the sensor;
(2) an angle of the detection point relative to the sensor; and
(3) coordinates of the detection point in a sensor coordinate system, a world coordinate system, or another coordinate system.

The world coordinate system is a reference coordinate system (or an absolute coordinate system) of an entire system, and may be used to describe a location of any object (like a sensor or a target) in a scenario.

It should be understood that a specific form of the sensor coordinate system, the world coordinate system, or the

another coordinate system is not limited in this embodiment of this application. For example, the sensor coordinate system may be a two-dimensional coordinate system or a three-dimensional coordinate system.

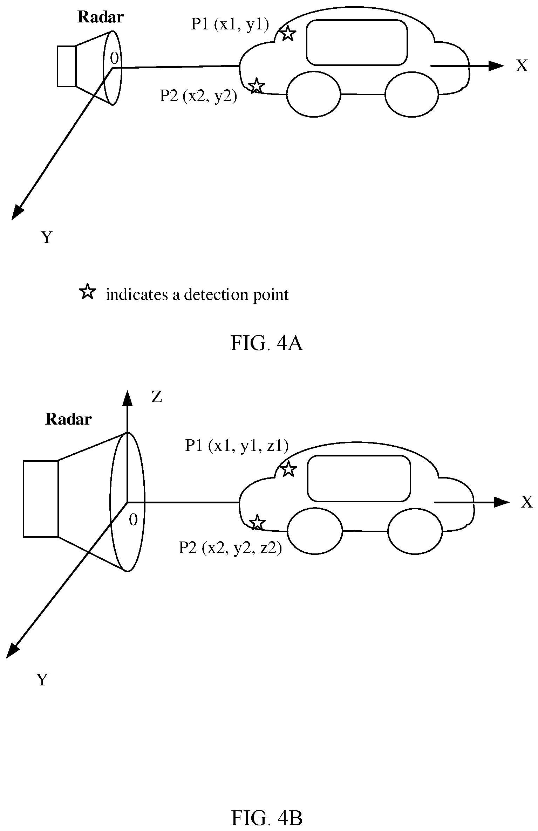

For example, refer to FIG. 4A. An example in which a sensor is a radar is used. A radar coordinate system is a two-dimensional rectangular coordinate system, and an origin of the radar coordinate system is located at a location of the radar. The radar coordinate system includes an X-axis and a Y-axis, a plane on which the X-axis and the Y-axis are located is a horizontal plane, the X-axis overlaps a normal of the radar, and the Y-axis is perpendicular to the normal of the radar. Correspondingly, first point cloud data includes an X coordinate and a Y coordinate of each detection point on a surface of a target in the radar coordinate system. As shown in FIG. 4A, an example in which the target is a vehicle is used, and there are coordinates of two detection points on the vehicle, namely, P1 and P2. Coordinates of P1 are (x1, y1), and coordinates of P2 are (x2, y2).

Certainly, the radar coordinate system may also be a three-dimensional coordinate system. For example, refer to FIG. 4B. A radar coordinate system includes an X-axis, a Y-axis, and a Z-axis. Correspondingly, first point cloud data includes an X coordinate, a Y coordinate, and a Z coordinate of each detection point on a surface of a target in the radar coordinate system. Compared with the radar in FIG. 4A, a radar in FIG. 4B may further obtain coordinates of a detection point in a height direction (namely, the Z-axis).

It should be understood that FIG. 4A and FIG. 4B are merely examples. In actual application, the radar coordinate system may alternatively be in another form, for example, a polar coordinate system. This is not limited in this application.

Further, after processing the reflected signal received by the sensor, in addition to obtaining a location of each detection point in at least one detection point of the target, the sensor may further obtain a first preset feature of each detection point in the at least one detection point. The first preset feature includes, but is not limited to, one or more of radar cross section (Radar Cross Section, RCS), energy, a speed, or the like. Correspondingly, the first point cloud data may further include the first preset feature of each detection point in the at least one detection point.

For ease of description, data of each detection point in the first point data may be indicated as:

$$\{r_i, v_i, a_i, p_i, rcs_i, x_i, y_i \ldots\},$$

where

$i = 0,1,2, \ldots N - 1$, and N indicates a total quantity of detection points of the target; i indicates an index of a detection point; $r_i$ indicates a value of a distance between a detection point whose index is i and a sensor; $v_i$ indicates a speed value of a detection point whose index is i, $a_i$ indicates a value of an angle of a detection point whose index is i relative to a sensor, $p_i$ indicates a power value of a detection point whose index is i; $rcs_i$ indicates radar cross section of a detection point whose index is i; $x_i$ indicates an X coordinate of a detection point whose index is i in a radar coordinate system; and $y_i$ indicates a Y coordinate of a detection point whose index is i in a radar coordinate system.

S302: Decompose the first point cloud data into a first direction, to obtain first data.

The first direction is a movement direction of the target, or the first direction is opposite to a movement direction of the target, or the first direction is perpendicular to a movement direction of the target. In specific implementation, the sensor may track a trajectory of point cloud data corresponding to a target, to obtain a movement direction of the target.

Decomposing the first point cloud data into the first direction includes mapping the first point cloud data to the first direction, and determining a corresponding projection point for each detection point in the first direction. A location of the projection point may indicate a component of a location of a detection point in the first direction. A location of a projection point corresponding to the at least one detection point of the target in the first direction may indicate a distribution status of detection points of the target in the first direction.

Correspondingly, the first data includes the location of the projection point of the at least one detection point in the first direction, or the distribution status of detection points of the target in the first direction.

In a possible implementation, the location of each detection point in the at least one detection point includes coordinates of each detection point in the at least one detection point in the sensor coordinate system. The sensor may project the coordinates of each detection point in the at least one detection point in the sensor coordinate system onto a first coordinate system, to obtain projection coordinates of each detection point in the first coordinate system. A positive direction of a first coordinate axis of the first coordinate system may be the same as or opposite to the first direction, and the projection coordinates of each detection point in the first coordinate system may indicate a location that is of a projection point of the detection point in the first direction and that is in the first direction. Correspondingly, the first data includes the projection coordinates of each detection point in the at least one detection point in the first coordinate system.

Optionally, an origin of the first coordinate system may be a geometric center, a centroid, an energy center, an energy centroid, a weighting-energy center, or the like of the target. This is not limited in this application.

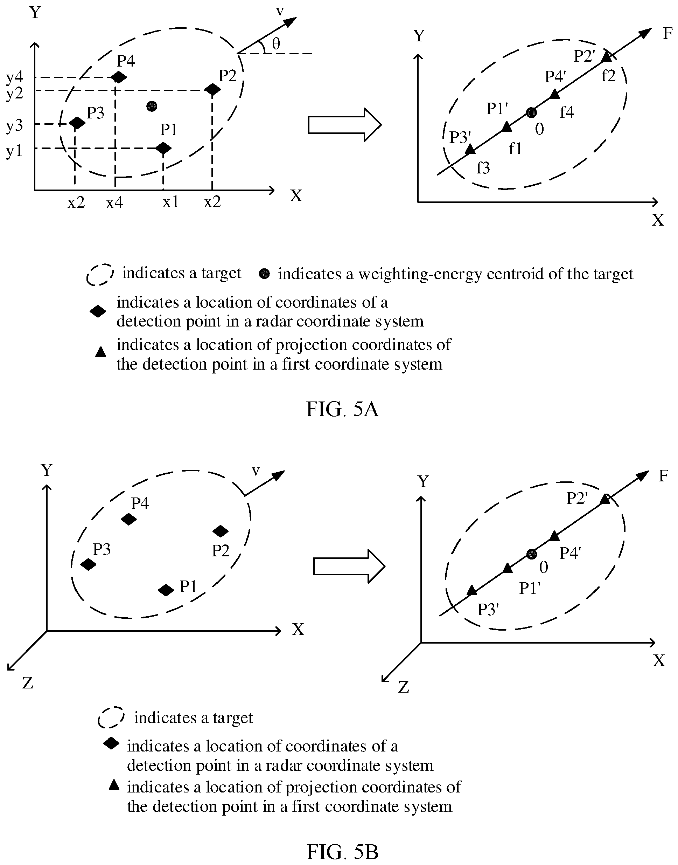

For example, the sensor is a radar. As shown in FIG. 5A, a radar coordinate system is a two-dimensional rectangular coordinate system, a plane on which an X-axis and a Y-axis are located is a horizontal plane, and first point cloud data includes two-dimensional coordinates of four detection points on a target in the radar coordinate system,

namely, P1 (x1, y1), P2 (x2, y2), P3 (x3, y3), and P4 (x4, y4). v indicates a movement direction of the target. An angle between the movement direction of the target and a Z axis is θ. A first coordinate system is a one-dimensional coordinate system, and includes one coordinate axis, namely, a first coordinate axis (indicated by F). A positive direction of the first coordinate axis is the same as the movement direction of the target, and an origin is a weighting-energy centroid of the target.

In specific implementation, the weighting-energy centroid of the target may be determined according to the following formulas:

$$\mathrm{center_x} = \frac{\sum_{i=0}^{N-1} x_i \times p_i}{\sum_{i=0}^{N-1} p_i},$$

and

$$\mathrm{center_y} = \frac{\sum_{i=0}^{N-1} y_i \times p_i}{\sum_{i=0}^{N-1} p_i},$$

where

$\mathrm{center_x}$ indicates an X coordinate of the weighting-energy centroid in the radar coordinate system, and $\mathrm{center_y}$ indicates a Y coordinate of the weighting-energy centroid in the radar coordinate system.

Further, projection coordinates of the detection point in the first coordinate system may be determined according to the following formula:

$$\mathrm{projCoor_i} = (x_i - \mathrm{center_x}) \times \cos(\theta) + (y_i - \mathrm{center_y}) \times \sin(\theta),$$

where

$\mathrm{projCoor_i}$ indicates projection coordinates of the detection point whose index is i in the first coordinate system.

As shown in FIG. 5A, a projection point corresponding to the detection point P1 in the first coordinate system is P1', f1 indicates a coordinate value of P1' in the first coordinate system, a projection point corresponding to the detection point P2 in the first coordinate system is P2', f2 indicates a coordinate value of P2' in the first coordinate system, a projection point corresponding to the detection point P3 in the first coordinate system is P3', f3 indicates a coordinate value of P1' in the first coordinate system, a projection point corresponding to the detection point P4 in the first coordinate system is P4', and f4 indicates a coordinate value of P1' in the first coordinate system. In this example, the first coordinate system is a one-dimensional coordinate system, and a positive direction of a coordinate axis of the coordinate system is the same as the movement direction of the target. Therefore, coordinates of a projection point corresponding to each detection point in the first coordinate system may indicate a location of the projection point of the detection point in the first direction.

It may be understood that, in FIG. 5A, that the radar coordinate system is a two-dimensional coordinate system is used as an example. Actually, the radar coordinate system may also be a coordinate system in another form.

As shown in FIG. 5B, the radar coordinate system may also be a three-dimensional coordinate system, and projection coordinates of a detection point in a first coordinate system may be:

$\mathrm{projCoor_i} = (x_i - \mathrm{center_x}) \times \sin(\theta 1) + (y_i - \mathrm{center_y}) \times \sin(\theta 2) + (z_i - \mathrm{center_z}) \times \sin(\theta 3)$,

where

θ1 is an included angle between a movement direction of a target and an X-axis of the radar coordinate system, θ2 is an included angle between the movement direction of the target and a Y-axis of the radar coordinate system, and θ3 is an included angle between the movement direction of the target and a Z-axis of the radar coordinate system.

It should be noted that, the foregoing uses an example in which a first direction is the movement direction of the target, that is, a location of a detection point is decomposed into the movement direction of the target. For an implementation of decomposing the location of the detection point into another direction (for example, the first direction is the same as or vertical to the movement direction of the target), refer to a method for decomposing the location of the detection point into the movement direction of the target. Details are not described herein again.

It should be further noted that the foregoing is an example in which the first coordinate system is a one-dimensional coordinate system. In actual application, the first coordinate system may also be a coordinate system in another form.

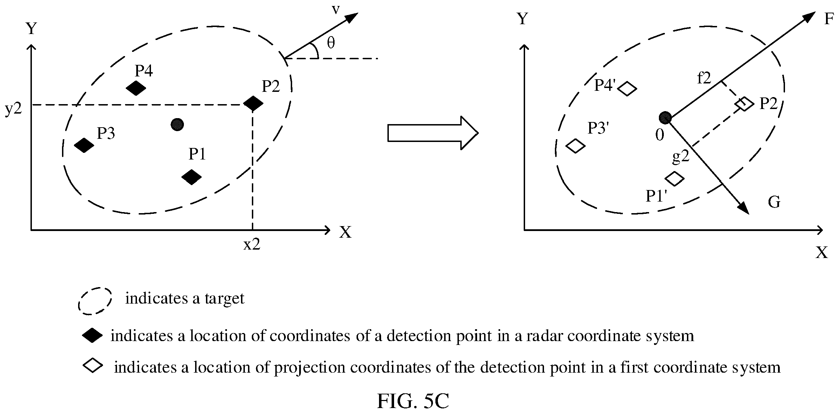

For example, as shown in FIG. 5C, a first coordinate system is a two-dimensional coordinate system, the first coordinate system includes a first coordinate axis (indicated by F) and a second coordinate axis (indicated by G), a positive

direction of the first coordinate axis is the same as a movement direction of a target, a positive direction of the second coordinate axis is perpendicular to the movement direction of the target, and a plane on which the second coordinate axis and the first coordinate axis are located is a horizontal plane. Correspondingly, a location of a projection point of each detection point in the first coordinate system may be indicated by an F coordinate and a G coordinate of the projection point. For example, a projection point corresponding to a detection point P1 in the first coordinate system is P1', coordinates of P1' in the first coordinate system are (f1, g1), a projection point corresponding to a detection point P2 in the first coordinate system is P2', coordinates of P2' in the first coordinate system are (f2, g2), a projection point corresponding to a detection point P3 in the first coordinate system is P3', coordinates of P3' in the first coordinate system are (f3, g3), a projection point corresponding to a detection point P4 in the first coordinate system is P4', and coordinates of P4' in the first coordinate system are (f4, g4). FIG. 5C shows only P2'. For a manner of calculating the F coordinate of each detection point and a manner of calculating the G coordinate of each detection point, refer to the manner of calculating the F coordinate in the example provided in FIG. 5A. Details are not described herein again. In this example, the first coordinate system is a two-dimensional coordinate system, and the positive direction of the F-axis in the coordinate system is the same as the movement direction of the target. Therefore, the F coordinate of the projection point corresponding to each detection point in the first coordinate system may indicate a location of the projection point of the detection point in the first direction.

In a possible design, decomposing the first point cloud data into the first direction may further include decomposing a first preset feature of each detection point in the at least one detection point into the first direction. Decomposing a first preset feature of a detection point may be understood as: decomposing the first preset feature of the detection point into N components, and then respectively assigning the N components to N points in the first direction, where N is a positive integer. After the first preset feature of each detection point is decomposed into the first direction, components of the first preset features of points in the first direction may be accumulatively obtained through statistics. The components that are of the first preset features of points in the first direction and that are accumulatively obtained may indicate a distribution status of the first preset features of the target in the first direction.

Correspondingly, the first data further includes the components that are of the first preset features of points in the first direction and that are accumulatively obtained, or the distribution status of the first preset features of the target in the first direction.

In a possible design, a sensor may project a first preset feature of each detection point onto a first coordinate system based on projection coordinates of the detection point in the first coordinate system, to decompose the first preset feature of each detection point into a first direction. The first coordinate system is a one-dimensional coordinate system, and a positive direction of a first coordinate axis of the first coordinate system is the same as or opposite to the first direction.

For example, the first coordinate system is the one-dimensional coordinate system shown in FIG. 5A. The sensor may project the first preset feature of each detection point onto an F-axis based on the projection coordinates (namely, coordinates on the F-axis) of the detection point in the first coordinate system. Projecting the first preset feature of the detection point onto the F-axis may be understood as: assigning N components of the first preset feature of the detection point to N points on the F-axis. Components of an obtained first preset feature of each point may also be referred to as a quantity of first preset feature that is of the point and that is obtained through projection.

After projection operation is performed on the first preset features of all the detection points, the sensor may collect statistics on a quantity of first preset features that are of points on the F-axis and that are accumulatively projected, to obtain a distribution status of the first preset features of the target in the first direction (namely, a movement direction of the target).

In a possible implementation, the sensor may project all the first preset features of detection points onto projection points of the detection points in the first coordinate system. In other words, the first preset features have only one component, and the component is a total quantity of the first preset features. In this way, complexity of projection of the first preset features can be reduced.

In another possible implementation, the first preset features of detection points may be projected onto a scale of a first coordinate axis of the first coordinate system. This facilitates subsequent statistics on a quantity of first preset features that are of points in the first coordinate system and that are accumulatively projected, and helps standardize or quantify data processing.

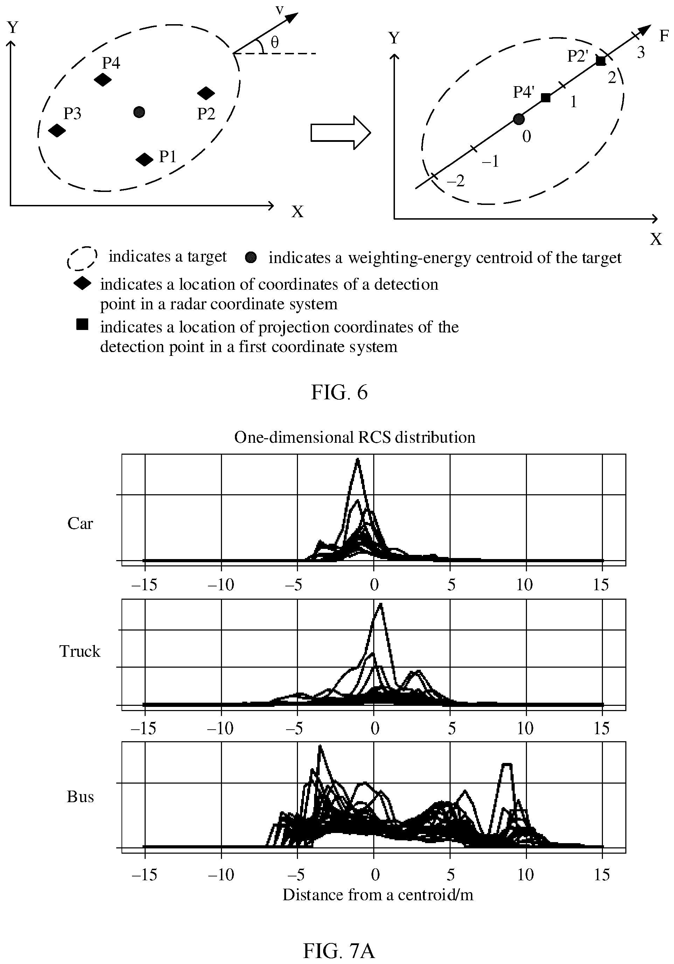

It may be understood that a plurality of scales are distributed on the first coordinate axis at spacing of a unit length, for example, {..., -2, -1, 0, 1, 2, 3, ...}, as shown in FIG. 6.

In specific implementation, if projection coordinates of a first detection point (the first detection point is a detection point in at least one detection point) in the first coordinate system exactly fall on a scale of the first coordinate axis, for example, a first scale, all first preset features of the first detection point are projected onto the first scale.

In specific implementation, if projection coordinates of a second detection point (the second detection point is a detection point in at least one detection point) in the first coordinate system fall between two adjacent scales on the first coordinate axis, for example, between a second scale and a third scale, a projection manner of a first preset feature of the second detection point may be any one of the following.

Manner 1: Project the first preset feature of the second detection point onto a scale that is of the second scale and

the third scale and that is closer to the projection coordinates of the second detection point in the first coordinate system.

Manner 2: Decompose the first preset feature into a plurality of components, and separately project the components onto different scales. For example, a weighting coefficient corresponding to each scale is determined based on a distance between each scale in at least two scales of the first coordinate axis and the projection coordinates of the second detection point in the first coordinate system, and then the first preset feature of the second detection point is weighted based on the weighting coefficient corresponding to each scale, and a weighted first preset feature of the second detection point is projected onto each scale. The at least two scales include the second scale and the third scale, and the weighting coefficient corresponding to each scale is negatively correlated with the distance between each scale and the projection coordinates of the second detection point in the first coordinate system.

An example in which rcs of a detection point is projected onto the first coordinate axis is used.

As shown in FIG. 6, if projection coordinates P2' corresponding to a detection point P2 are at a location of a scale value 2 on the first coordinate axis, rcs like $rcs_2$ corresponding to P2 may be projected onto the location of the scale value 2. The scale value may be an integer or a decimal. This is not limited in this embodiment of this application.

As shown in FIG. 6, projection coordinates P4' corresponding to a detection point P4 fall between a scale value 0 and a scale value 1 on the first coordinate axis. A distance between P4' and the scale value 0 is L0, a distance between P4' and the scale value 1 is L1, and L0 > L1. In this case, rcs like $rcs_4$ corresponding to P4 may be projected onto a location of the scale value 0.

Alternatively, rcs like $rcs_4$ corresponding to P4 is weighted and then projected onto locations of a scale value 0 and a scale value 1. For example, if a distance between P4' and the scale value 0 is L0, and a distance between P4' and the scale value 1 is L1, $rcs_4 \times [(L0/(L0 + L1)]$ may be projected onto the location of the scale value 0, and $rcs_4 \times [(L1/(L0 + L1)]$ may be projected onto the location of the scale value 1.

Alternatively, $rcs_4$ corresponding to P4 is weighted and then projected onto locations of a scale value -1, a scale value 0, a scale value 1, and a scale value 2. For example, if a distance between P4' and the scale value -1 is L1', a distance between P4' and the scale value 0 is L0, a distance between P4' and the scale value 1 is L1, and a distance between P4' and the scale value 2 is L2, $rcs_4 \times [(L1'/(L1' + L0 + L1 + L2)]$ may be projected onto the location of the scale value -1, $rcs_4 \times [(L0/(L1' + L0 + L1 + L2)]$ may be projected onto the location of the scale value 0, $rcs_4 \times [(L1/(L1' + L0 + L1 + L2)]$ may be projected onto the location of the scale value 1, and $rcs_4 \times [(L2/(L1' + L0 + L1 + L2)]$ may be projected onto the location of the scale value 2.

It may be understood that an initial value of a quantity of first preset features projected at each scale location on the first coordinate axis is 0, and when projection is performed at each scale location once, the quantity of first preset features projected at the scale location is accumulated once.

It should be understood that the foregoing is merely an example. In actual application, there may be another projection manner. This is not limited in this application.

In addition, it should be noted that, in a moving process of a target, the origin, the coordinate axis, and the like of the first coordinate system may be unchanged relative to the target, but locations of the origin, the coordinate axis, and the like of the first coordinate system in a world coordinate system dynamically change with a movement of the target.

S303: Determine a type of the target based on the first data.

Specifically, after obtaining the first data, the sensor may determine a second preset feature of the target based on the first data, and may further determine the type of the target based on the second preset feature. The second preset feature may include one or more of a distance width, a speed width, one-dimensional range profile, two-dimensional entropy, or the like. This is not limited in this application.

For example, the first direction is a movement direction of a target. After the sensor decomposes locations of all detection points of the target into the first direction, a distance width of the target in the movement direction (namely, a length of the target in the movement direction) may be obtained based on a distribution status of all the detection points of the target in the first direction (or locations of projection points of all the detection points of the target in the first direction). For a vehicle, regardless of a direction in which the vehicle travels, a distance width in a movement direction of the vehicle may accurately indicate a length of the vehicle, and further, a type of the vehicle may be recognized based on the length.

For example, the first direction is perpendicular to a movement direction of a target. After the sensor decomposes locations of all detection points of the target into the first direction, a distance width of the target in the direction perpendicular to the movement direction of the target may be obtained based on a distribution status of all the detection points of the target in the first direction (or locations of projection points of all the detection points of the target in the first direction). For a vehicle, regardless of a direction in which the vehicle travels, a distance width in a direction perpendicular to a movement direction of the vehicle may accurately indicate a width of the vehicle, so that a type of the vehicle may be recognized based on the width.

For a speed width, one-dimensional range profile, or two-dimensional entropy, refer to the foregoing examples of the distance width. Details are not described herein again.

In S301 to S303, the point cloud data of the target is decomposed into the first direction, so that the extracted feature of the target does not change with the movement direction of the target, to reduce or eliminate impact of the

movement direction of the target on target recognition, and improve accuracy of the target recognition.

In a possible implementation, the sensor may further obtain second point cloud data; decompose the second point cloud data into the first direction to obtain second data; and determine a type of the target based on the first data and the second data.

Collection time of the first point cloud data is different from collection time of the second point cloud data. For example, the first point cloud data and the second point cloud data are two frames of point cloud data that are sequentially collected by the sensor. Certainly, in actual application, determining a type of a target based on decomposition results (namely, the first data and the second data) of two frames of point cloud data in a first direction is not be limited, and the type of the target may be further determined based on decomposition results of more frames of point cloud data in the first direction.

In this implementation, a feature of the target is extracted based on the decomposition results corresponding to multi-frame point cloud data, so that accuracy of target recognition can be further improved.

The following uses an example in which multi-frame accumulation processing is performed on distribution of RCS in the first direction.

For ease of description, the distribution of RCS in the first direction may be referred to as "one-dimensional rcs distribution". For example, a first preset feature of a detection point is projected onto a scale on a first coordinate axis of a first coordinate system. Assuming that a total quantity of scales on the first coordinate axis is M, an M-dimensional vector may be used to indicate the one-dimensional rcs distribution. For example, projRcs = $(m_0, m_1, ..., m_{M-1})$, where M elements in projRcs are in a one-to-one correspondence with M scales on the first coordinate axis, and a value of each element is an rcs projection amount of a scale corresponding to each element.

That multi-frame accumulation processing is performed on the distribution of RCS in the first direction may include: first, performing centroid alignment on one-dimensional rcs distribution obtained from a current frame and accumulated rcs distribution obtained from a historical frame, and optionally, a method for the centroid alignment may be a cross-correlation method; and then, performing vector addition on aligned one-dimensional rcs distribution obtained from the current frame and aligned accumulated rcs distribution obtained from the historical frame, to obtain one-dimensional rcs distribution accumulated from the current frame:

$$\text{projRcs}' = (m_0{}',\ m_{1\prime},\ ...,\ m_{M-1}{}').$$

After the accumulated one-dimensional rcs distribution is obtained, an average of the one-dimensional rcs distribution accumulated from the current frame may be obtained based on a total accumulated quantity of frames. An inter-frame standard deviation (a standard deviation of time domain fluctuation) of rcs of a centroid of the one-dimensional rcs distribution may also be extracted. Information entropy of the one-dimensional rcs distribution accumulated from the current frame, which is referred to as rcs distribution entropy for short, may also be extracted.

For example, the rcs distribution entropy is indicated by entropy, and entropy satisfies the following relationships:

$$\text{entropy} = -\sum_{k=0}^{M-1} p(k)\log2(p(k));$$

and

$$p(k) = \frac{m_k{}'}{\sum_{j=0}^{M-1} m_j{}'},$$

where

j indicates an index of a scale, and a value of j is a positive integer ranging from 0 to M-1; and p(k) indicates: as of the current frame, a proportion of an rcs projection amount (namely, $m_k'$) accumulated on a scale whose index is j to a sum (namely, $\sum_{j=0}^{M-1} m_j{}'$) of rcs projection amounts accumulated on all scales.

The following provides two groups of experimental data.

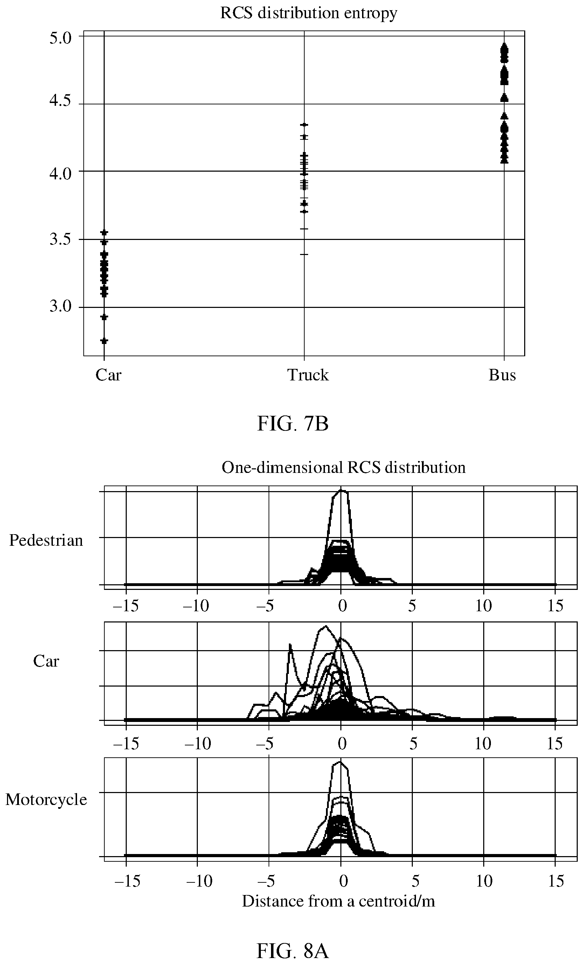

FIG. 7A is a comparison diagram of one-dimensional rcs distribution of a truck, a bus, and a car, and FIG. 7B is a comparison diagram of rcs distribution entropy of a truck, a bus, and a car. It can be learned from FIG. 7A and FIG. 7B that, the one-dimensional rcs distribution of the truck, the bus, and the car is obviously different, and there is also an obvious classification boundary between the rcs distribution entropy. Therefore, the one-dimensional rcs distribution or the rcs distribution entropy can be used to classify and recognize the truck, the bus, and the car. Table 2 shows precision rates (Precision) and recall rates (Recall) corresponding to recognition results of three types of targets: a truck, a bus, and a car.

The precision rate is a proportion of data that is correctly predicted in data in which an example is predicted as a

correct example. For example, the car is a correct example, and 100 real vehicles (including 93 cars and seven trucks) are classified and recognized by using the method in this application. If a recognition result is that all are cars, a precision rate corresponding to the cars is 0.93. A recall rate is a proportion of data that is correctly predicted in data in which an example is a correct example. For example, the car is a correct example, and 100 real vehicles (all of which are cars) are classified and recognized by using the method in this application. If a recognition result is that there are 92 cars and eight trucks, a recall rate corresponding to the cars is 0.92.

**Table 2**

| Types | Precision rate | Recall rate |
|---|---|---|
| Car | 0.93 | 0.92 |
| Truck | 0.93 | 0.92 |
| Bus | 0.96 | 0.99 |

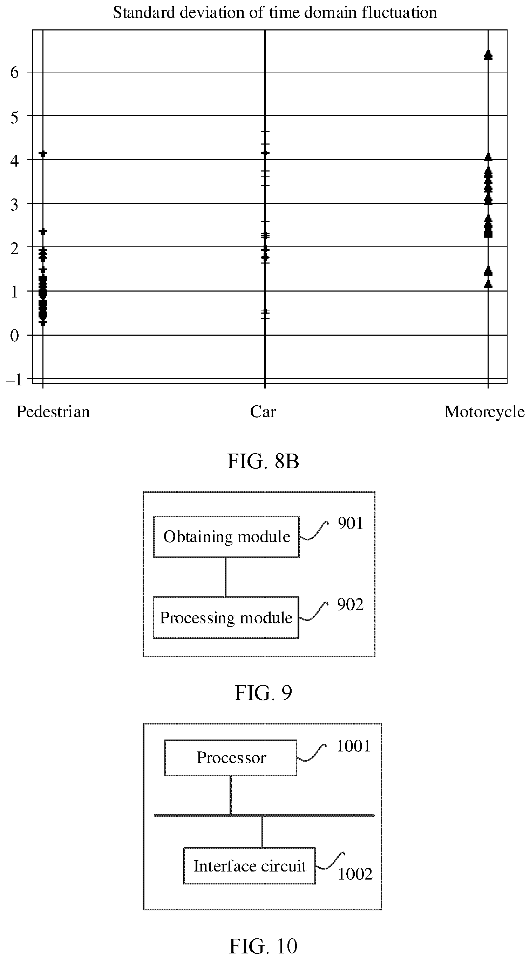

FIG. 8A is a comparison diagram of one-dimensional rcs distribution of a car, a pedestrian, and a motorcycle, and FIG. 8B is a comparison diagram of a standard deviation of time domain fluctuation of a car, a pedestrian, and a motorcycle. It can be learned from FIG. 8A that the one-dimensional rcs distribution of the car is greatly different from that of the pedestrian and the motorcycle, but the one-dimensional rcs distribution of the pedestrian is similar to the one-dimensional rcs distribution of the motorcycle. It can be learned from FIG. 8B that there is an obvious classification boundary between a standard deviation of time domain fluctuation of the pedestrian and a standard deviation of time domain fluctuation of the motorcycle. Therefore, the car, pedestrian, and motorcycle may be classified and recognized based on the one-dimensional rcs distribution and the standard deviation of the time domain fluctuation. Table 3 shows precision rates and recall rates corresponding to recognition results of three types of targets: a car, a pedestrian, and a motorcycle.

**Table 3**

| Types | Precision rate | Recall rate |
|---|---|---|
| Pedestrian | 0.87 | 0.96 |
| Motorcycle | 0.93 | 0.82 |
| Car | 0.95 | 0.96 |

It can be learned from the foregoing experimental data that, in this embodiment of this application, inter-frame accumulation processing is performed on a decomposition result of the point cloud data in the first direction, so that impact of factors such as change of a movement direction of the target and inter-frame fluctuation of the feature can be reduced or eliminated, to further improve accuracy of target recognition.

In an optional implementation, after obtaining a recognition result (for example, a type of a target), the sensor may further calculate confidence of the recognition result, and output the recognition result if the confidence of the recognition result is greater than a first threshold. In this way, it can be ensured that the confidence of the output recognition result is high.

Optionally, outputting a recognition result may be outputting a type of a target through a display, a voice, or the like.

Further, if the confidence of the recognition result is greater than the threshold, the sensor may further update the first threshold based on the confidence of the recognition result. In next recognition, only a recognition result that exceeds the confidence of the recognition result can be output. In this way, the sensor can output only a recognition result with highest historical confidence.

Further, when the confidence of the recognition result is greater than a second threshold, the sensor may stop recognition, for example, stop transmitting a detection signal or processing a received signal. In this way, a calculation amount of the sensor can be reduced, power consumption can be reduced, and a service life of the sensor can be prolonged.

It may be understood that the foregoing implementations may be combined with each other.

Based on a same technical concept, an embodiment of this application provides a target recognition apparatus. The apparatus includes a module/unit/means for performing the method performed by the sensor in the foregoing method embodiment. The module/unit/means may be implemented by using software, or may be implemented by using hardware, or may be implemented by executing corresponding software by hardware.

As shown in FIG. 9, the apparatus may include an obtaining module 901 and a processing module 902. The

obtaining module 901 is configured to obtain first point cloud data. The processing module 902 is configured to: decompose the first point cloud data into a first direction, to obtain first data; and determine a type of a target based on the first data.

It should be understood that all related content of the steps in the foregoing method embodiments may be referenced to function descriptions of corresponding functional modules, and details are not described herein again.

During specific implementation, the foregoing apparatus may have a plurality of product forms. The following describes several possible product forms.

As shown in FIG. 10, an embodiment of this application further provides a target recognition apparatus. The apparatus includes at least one processor 1001 and an interface circuit 1002. The interface circuit 1002 is configured to: receive a signal from another apparatus other than the apparatus and transmit the signal to the processor 1001, or send a signal from the processor 1001 to another communication apparatus other than the apparatus. The processor 1001 is configured to implement, by using a logic circuit or executing code instructions, the method performed by the sensor in the foregoing method embodiments.

It should be understood that the processor in this embodiment of this application may be implemented by using hardware or may be implemented by using software. When the processor is implemented by using hardware, the processor may be a logic circuit, an integrated circuit, or the like. When the processor is implemented by using software, the processor may be a general-purpose processor, and is implemented by reading software code stored in a memory.

For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a discrete gate, a transistor logic device, a discrete hardware component, or the like. The general-purpose processor may be a microprocessor, or the processor may be any conventional processor or the like.

It should be understood that the memory in this embodiment of this application may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. Through an example but not a limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate, a transistor logic device, or a discrete hardware component, the memory (storage module) may be integrated into the processor.

It should be noted that the memory described in the text is intended to include, but is not limited to these and any other suitable types of memories.

Based on a same technical concept, an embodiment of this application further provides a computer-readable storage medium, including a program or instructions. When the program or the instructions are run on a computer, the method performed by the sensor in the foregoing method embodiment is performed.

Based on a same technical concept, an embodiment of this application further provides a computer program product including instructions. The computer program product stores the instructions. When the instructions are run on a computer, the method performed by the sensor in the foregoing method embodiment is performed.

Based on a same technical concept, an embodiment of this application further provides a terminal, including any apparatus described above.

Optionally, the terminal may be deployed on any device like a vehicle, a ship, an airplane, an uncrewed aerial vehicle, or a smart home device, or may be deployed on a roadside, or may be deployed on a building. This is not limited in this application.

Optionally, the terminal is a vehicle.

A person skilled in the art should understand that embodiments of this application may be provided as methods, systems, or computer program products. Therefore, this application may be in a form of a hardware-only embodiment, a software-only embodiment, or an embodiment combining software and hardware aspects. In addition, this application may use a form of a computer program product that is implemented on one or more computer-usable storage media (including but not limited to a magnetic disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or block in the flowcharts and/or the block diagrams, and a combination of a process and/or a block in the flowcharts and/or the block diagrams. These computer program instructions may be provided for a general-purpose computer, a dedicated computer, an embedded processor, or a processor of any other programmable data processing device to generate a machine, so that instructions executed by a computer or a processor of any other programmable data processing device generate an apparatus for implementing a specific function in one or more processes in the flowcharts and/or in one or more blocks in the block diagrams.

These computer program instructions may also be stored in a computer-readable memory that can guide a computer or another programmable data processing device to work in a specific manner, so that the instructions stored in the computer-readable memory generate a manufactured product including an instruction apparatus. The instruction apparatus implements a function specified in one or more procedures in the flowchart and/or one or more blocks in the block diagram.

The computer program instructions may alternatively be loaded onto a computer or another programmable data processing device, so that a series of operations and steps are performed on the computer or the another programmable device, and computer-implemented processing is generated. Therefore, the instructions executed on the computer or the another programmable device provide steps for implementing a specific function in one or more procedures in the flowcharts and/or in one or more blocks in the block diagrams.

## Claims

1. A target recognition method, wherein the method comprises:

   obtaining (S301) first point cloud data;
   decomposing (S302) the first point cloud data into a first direction, to obtain first data; and
   determining (S303) a type of a target based on the first data;
   wherein the first direction is a movement direction of the target, or the first direction is opposite to a movement direction of the target, or the first direction is perpendicular to a movement direction of the target;
   wherein obtaining first point cloud data comprises;
   transmitting, by a sensor, a signal to the outside,
   receiving, by the sensor, a reflection, by the target, of the transmitted signal to form a reflected signal, and
   processing, by the sensor, the reflected signal received by the sensor, to obtain the point cloud data;
   wherein
   decomposing the location of each detection point comprises mapping the first point cloud data to the first direction, and determining a corresponding projection point for each detection point in the first direction;
   wherein the sensor is disposed on a vehicle.

2. The method according to claim 1, wherein the first point cloud data comprises a location of at least one detection point of the target.

3. The method according to claim 2, wherein the location of the at least one detection point comprises coordinates of each detection point in the at least one detection point in a radar coordinate system; and
   the decomposing the first point cloud data into a first direction comprises:
   projecting the coordinates of each detection point in the at least one detection point in the radar coordinate system onto a first coordinate system, to obtain projection coordinates of each detection point in the first coordinate system.

4. The method according to claim 3, wherein a positive direction of a first coordinate axis of the first coordinate system is the same as or opposite to the first direction; and an origin of the first coordinate system is a geometric center, a centroid, an energy center, or an energy centroid of the target.

5. The method according to claim 3, wherein the first point cloud data further comprises a first preset feature of each detection point in the at least one detection point, and the first preset feature comprises one or more of radar cross section, energy, or a speed.

6. The method according to claim 5, wherein the decomposing the first point cloud data into a first direction further comprises:
   projecting the first preset feature of each detection point onto the first coordinate system based on the projection

coordinates of each detection point in the first coordinate system.

7. The method according to claim 6, wherein projection coordinates of a first detection point in the at least one detection point in the first coordinate system fall on a first scale of a first coordinate axis; and
the projecting the first preset feature of each detection point onto the first coordinate system based on the projection coordinates of each detection point in the first coordinate system comprises:
projecting a first preset feature of the first detection point onto the first scale.

8. The method according to claim 6, wherein projection coordinates of a second detection point in the at least one detection point in the first coordinate system fall between a second scale and a third scale of a first coordinate axis; and the projecting the first preset feature of each detection point onto the first coordinate system based on the projection coordinates of each detection point in the first coordinate system comprises:

projecting a first preset feature of the second detection point onto a scale that is of the second scale and the third scale and that is closer to the projection coordinates of the second detection point in the first coordinate system; or
determining, based on a distance between each of at least two scales on the first coordinate axis and the projection coordinates of the second detection point in the first coordinate system, a weighting coefficient corresponding to each scale, wherein the at least two scales comprise the second scale and the third scale, and the weighting coefficient corresponding to each scale is negatively correlated with the distance between each scale and the projection coordinates of the second detection point in the first coordinate system; weighting a first preset feature of the second detection point based on the weighting coefficient corresponding to each scale; and projecting a weighted first preset feature of the second detection point onto each scale.

9. The method according to any one of claims 1 to 8, wherein the determining a type of a target based on the first data comprises:

determining a second preset feature of the target based on the first data, wherein the second preset feature comprises one or more of a distance width, a speed width, one-dimensional range profile, or two-dimensional entropy; and
determining the type of the target based on the second preset feature.

10. The method according to any one of claims 1 to 9, wherein the method further comprises:

obtaining second point cloud data; and decomposing the second point cloud data into the first direction, to obtain second data, wherein collection time of the first point cloud data is different from collection time of the second point cloud data; and
the determining a type of a target based on the first data comprises:
determining the type of the target based on the first data and the second data.

11. A target recognition apparatus, wherein the apparatus comprises a processor (1001) and an interface circuit (1002), the interface circuit (1002) is configured to: receive a signal from a sensor other than the apparatus and transmit the signal to the processor, and the processor (1001) is configured to implement the method according to any one of claims 1 to 10 by using a logic circuit or executing code instructions.

12. A computer-readable storage medium, comprising a program or instructions, wherein when the program or the instructions are executed by a computer, the method according to any one of claims 1 to 10 is performed.

13. A terminal, comprising the apparatus according to claim 11.

14. The terminal according to claim 13, wherein the terminal is the vehicle.

**Patentansprüche**

1. Zielerkennungsverfahren, wobei das Verfahren Folgendes umfasst:

Erlangen (S301) erster Punktwolkendaten;
Zerlegen (S302) der ersten Punktwolkendaten in eine erste Richtung, um erste Daten zu erlangen; und

Bestimmen (S303) eines Typs eines Ziels basierend auf den ersten Daten;
wobei die erste Richtung eine Bewegungsrichtung des Ziels ist oder die erste Richtung einer Bewegungsrichtung des Ziels entgegengesetzt ist oder die erste Richtung senkrecht zu einer Bewegungsrichtung des Ziels verläuft;
wobei das Erlangen erster Punktwolkendaten Folgendes umfasst:

Übertragen eines Signals nach außen durch einen Sensor,
Empfangen durch den Sensor einer Reflexion des übertragenen Signals durch das Ziel, um ein reflektiertes Signal zu erzeugen, und
Verarbeiten des durch den Sensor empfangenen reflektierten Signals durch den Sensor, um die Punktwolkendaten zu erlangen;
wobei
das Zerlegen des Standortes jedes Detektionspunkts Abbilden der ersten Punktwolkendaten auf die erste Richtung und Bestimmen eines entsprechenden Projektionspunkts für jeden Detektionspunkt in der ersten Richtung umfasst;
wobei der Sensor an einem Fahrzeug angebracht ist.

**2.** Verfahren nach Anspruch 1, wobei die ersten Punktwolkendaten einen Standort von mindestens einem Detektionspunkt des Ziels umfassen.

**3.** Verfahren nach Anspruch 2, wobei der Standort des mindestens einen Detektionspunkts die Koordinaten jedes Detektionspunkts in einem Radarkoordinatensystem umfasst; und
das Zerlegen der ersten Punktwolkendaten in eine erste Richtung Folgendes umfasst:
Projizieren der Koordinaten jedes Detektionspunkts in dem mindestens einen Detektionspunkt in dem Radarkoordinatensystem auf ein erstes Koordinatensystem, um die Projektionskoordinaten jedes Detektionspunkts in dem ersten Koordinatensystem zu erlangen.

**4.** Verfahren nach Anspruch 3, wobei die positive Richtung einer ersten Koordinatenachse des ersten Koordinatensystems mit der ersten Richtung übereinstimmt oder dieser entgegengesetzt ist; und ein Ursprung des ersten Koordinatensystems ein geometrischer Mittelpunkt, ein Schwerpunkt, ein Energiezentrum oder ein Energie-Schwerpunkt des Ziels ist.

**5.** Verfahren nach Anspruch 3, wobei die ersten Punktwolkendaten ferner ein erstes voreingestelltes Merkmal jedes Detektionspunkts in dem mindestens einen Detektionspunkt umfassen und das erste voreingestellte Merkmal eines oder mehrere von Radarquerschnitt, Energie oder Geschwindigkeit umfasst.

**6.** Verfahren nach Anspruch 5, wobei das Zerlegen der ersten Punktwolkendaten in eine erste Richtung ferner Folgendes umfasst:
Projizieren des ersten voreingestellten Merkmals jedes Detektionspunkts auf das erste Koordinatensystem basierend auf den Projektionskoordinaten jedes Detektionspunkts in dem ersten Koordinatensystem.

**7.** Verfahren nach Anspruch 6, wobei die Projektionskoordinaten eines ersten Detektionspunkts in dem mindestens einen Detektionspunkt in dem ersten Koordinatensystem auf eine erste Skala einer ersten Koordinatenachse fallen; und
das Projizieren des ersten voreingestellten Merkmals jedes Detektionspunkts auf das erste Koordinatensystem basierend auf den Projektionskoordinaten jedes Detektionspunkts in dem ersten Koordinatensystem Folgendes umfasst:
Projizieren eines ersten voreingestellten Merkmals des ersten Detektionspunkts auf die erste Skala.

**8.** Verfahren nach Anspruch 6, wobei die Projektionskoordinaten eines zweiten Detektionspunkts in dem mindestens einen Detektionspunkt in dem ersten Koordinatensystem zwischen eine zweite Skala und eine dritte Skala einer ersten Koordinatenachse fallen; und
das Projizieren des ersten voreingestellten Merkmals jedes Detektionspunkts auf das erste Koordinatensystem basierend auf den Projektionskoordinaten jedes Detektionspunkts in dem ersten Koordinatensystem Folgendes umfasst:

Projizieren eines ersten voreingestellten Merkmals des zweiten Detektionspunkts auf eine Skala, die aus der zweiten und der dritten Skala besteht und näher an den Projektionskoordinaten des zweiten Detektionspunkts in dem ersten Koordinatensystem liegt; oder

Bestimmen eines jeder Skala entsprechenden Gewichtungskoeffizienten basierend auf einem Abstand zwischen jeder von mindestens zwei Skalen auf der ersten Koordinatenachse und den Projektionskoordinaten des zweiten Detektionspunkts in dem ersten Koordinatensystem, wobei die mindestens zwei Skalen die zweite Skala und die dritte Skala umfassen und der jeder Skala entsprechende Gewichtungskoeffizient negativ mit dem Abstand zwischen der jeweiligen Skala und den Projektionskoordinaten des zweiten Detektionspunkts in dem ersten Koordinatensystem korreliert ist; Gewichten eines ersten voreingestellten Merkmals des zweiten Detektionspunkts basierend auf dem jeder Skala entsprechenden Gewichtungskoeffizienten; und Projizieren eines gewichteten ersten voreingestellten Merkmals des zweiten Detektionspunkts auf jede Skala.

**9.** Verfahren nach einem der Ansprüche 1 bis 8, wobei das Bestimmen eines Typs eines Ziels basierend auf den ersten Daten Folgendes umfasst:

Bestimmen eines zweiten voreingestellten Merkmals des Ziels basierend auf den ersten Daten, wobei das zweite voreingestellte Merkmal eines oder mehrere von einer Entfernungsbreite, einer Geschwindigkeitsbreite, einem eindimensionalen Reichweitenprofil oder einer zweidimensionalen Entropie umfasst; und
Bestimmen des Typs des Ziels basierend auf dem zweiten voreingestellten Merkmal.

**10.** Verfahren nach einem der Ansprüche 1 bis 9, wobei das Verfahren ferner Folgendes umfasst:

Erlangen von zweiten Punktwolkendaten; und Zerlegen der zweiten Punktwolkendaten in die erste Richtung, um zweite Daten zu erlangen, wobei sich der Erfassungszeitpunkt der ersten Punktwolkendaten von dem der zweiten Punktwolkendaten unterscheidet; und
das Bestimmen eines Typs eines Ziels basierend auf den ersten Daten Folgendes umfasst:
Bestimmen des Typs des Ziels basierend auf den ersten und den zweiten Daten.

**11.** Zielerkennungseinrichtung, wobei die Einrichtung einen Prozessor (1001) und eine Schnittstellenschaltung (1002) umfasst, wobei die Schnittstellenschaltung (1002) konfiguriert ist, um: ein Signal von einem anderen Sensor als der Einrichtung zu empfangen und das Signal an den Prozessor zu übertragen, und der Prozessor (1001) konfiguriert ist, um das Verfahren nach einem der Ansprüche 1 bis 10 unter Verwendung einer Logikschaltung oder durch Ausführen von Codeanweisungen durchzuführen.

**12.** Computerlesbares Speichermedium, umfassend ein Programm oder Anweisungen, wobei, wenn das Programm oder die Anweisungen durch einen Computer ausgeführt werden, das Verfahren nach einem der Ansprüche 1 bis 10 durchgeführt wird.

**13.** Endgerät, umfassend die Einrichtung nach Anspruch 11.

**14.** Endgerät nach Anspruch 13, wobei das Endgerät das Fahrzeug ist.

## Revendications

**1.** Procédé de reconnaissance de cible, dans lequel le procédé comprend :

l'obtention (S301) de premières données de nuage de points ;
la décomposition (S302) des premières données de nuage de points dans une première direction, pour obtenir de premières données ; et
la détermination (S303) d'un type d'une cible sur la base des premières données ;
dans lequel la première direction est une direction de mouvement de la cible, ou la première direction est opposée à une direction de mouvement de la cible, ou la première direction est perpendiculaire à une direction de mouvement de la cible ;
dans lequel l'obtention de premières données de nuage de points comprend ;
la transmission, par un capteur, d'un signal vers l'extérieur,
la réception, par le capteur, d'une réflexion, par la cible, du signal transmis pour former un signal réfléchi, et
le traitement, par le capteur, du signal réfléchi reçu par le capteur, pour obtenir les données de nuage de points ; dans lequel
la décomposition de l'emplacement de chaque point de détection comprend la mise en correspondance des premières données de nuage de points avec la première direction, et la détermination d'un point de projection

correspondant pour chaque point de détection dans la première direction ;
dans lequel le capteur est disposé sur un véhicule.

2. Procédé selon la revendication 1, dans lequel les premières données de nuage de points comprennent un emplacement d'au moins un point de détection de la cible.

3. Procédé selon la revendication 2, dans lequel l'emplacement de l'au moins un point de détection comprend des coordonnées de chaque point de détection dans l'au moins un point de détection dans un système de coordonnées radar ; et
la décomposition des premières données de nuage de points dans une première direction comprend :
la projection des coordonnées de chaque point de détection dans l'au moins un point de détection dans le système de coordonnées radar sur un premier système de coordonnées, pour obtenir des coordonnées de projection de chaque point de détection dans le premier système de coordonnées.

4. Procédé selon la revendication 3, dans lequel une direction positive d'un premier axe de coordonnées du premier système de coordonnées est la même ou opposée à la première direction ; et une origine du premier système de coordonnées est un centre géométrique, un centroïde, un centre d'énergie ou un centroïde d'énergie de la cible.

5. Procédé selon la revendication 3, dans lequel les premières données de nuage de points comprennent en outre une première caractéristique prédéfinie de chaque point de détection dans l'au moins un point de détection, et la première caractéristique prédéfinie comprend l'une ou plusieurs d'une section efficace radar, d'une énergie, ou d'une vitesse.

6. Procédé selon la revendication 5, dans lequel la décomposition des premières données de nuage de points dans une première direction comprend en outre :
la projection de la première caractéristique prédéfinie de chaque point de détection sur le premier système de coordonnées sur la base des coordonnées de projection de chaque point de détection dans le premier système de coordonnées.

7. Procédé selon la revendication 6, dans lequel des coordonnées de projection d'un premier point de détection dans l'au moins un point de détection dans le premier système de coordonnées se situe sur une première échelle d'un premier axe de coordonnées ; et
la projection de la première caractéristique prédéfinie de chaque point de détection sur le premier système de coordonnées sur la base des coordonnées de projection de chaque point de détection dans le premier système de coordonnées comprend :
la projection d'une première caractéristique prédéfinie du premier point de détection sur la première échelle.

8. Procédé selon la revendication 6, dans lequel des coordonnées de projection d'un second point de détection dans l'au moins un point de détection dans le premier système de coordonnées se situe entre une deuxième échelle et une troisième échelle d'un premier axe de coordonnées ; et
la projection de la première caractéristique prédéfinie de chaque point de détection sur le premier système de coordonnées sur la base des coordonnées de projection de chaque point de détection dans le premier système de coordonnées comprend :

la projection d'une première caractéristique prédéfinie du second point de détection sur une échelle qui est de la deuxième échelle et de la troisième échelle et qui est plus proche des coordonnées de projection du second point de détection dans le premier système de coordonnées ; ou
la détermination, sur la base d'une distance entre chacune d'au moins deux échelles sur le premier axe de coordonnées et les coordonnées de projection du second point de détection dans le premier système de coordonnées, d'un coefficient de pondération correspondant à chaque échelle, dans lequel les au moins deux échelles comprennent la deuxième échelle et la troisième échelle, et le coefficient de pondération correspondant à chaque échelle est négativement corrélé à la distance entre chaque échelle et les coordonnées de projection du second point de détection dans le premier système de coordonnées ; la pondération d'une première caractéristique prédéfinie du second point de détection sur la base du coefficient de pondération correspondant à chaque échelle ; et la projection d'une première caractéristique prédéfinie pondérée du second point de détection sur chaque échelle.

9. Procédé selon l'une quelconque des revendications 1 à 8, dans lequel la détermination d'un type d'une cible sur la base des premières données comprend :

la détermination d'une seconde caractéristique prédéfinie de la cible sur la base des premières données, dans lequel la seconde caractéristique prédéfinie comprend l'un ou plusieurs d'une largeur de distance, d'une largeur de vitesse, d'un profil de portée unidimensionnel ou d'une entropie bidimensionnelle ; et
la détermination du type de la cible sur la base de la seconde caractéristique prédéfinie.

**10.** Procédé selon l'une quelconque des revendications 1 à 9, dans lequel le procédé comprend en outre :

l'obtention de secondes données de nuage de points ; et la décomposition des secondes données de nuage de points dans la première direction, pour obtenir de secondes données, dans lequel le temps de collecte des premières données de nuage de points est différent du temps de collecte des secondes données de nuage de points ; et
la détermination d'un type d'une cible sur la base des premières données comprend :
la détermination du type de la cible sur la base des premières données et des secondes données.

**11.** Appareil de reconnaissance de cible, dans lequel l'appareil comprend un processeur (1001) et un circuit d'interface (1002), le circuit d'interface (1002) est configuré pour : recevoir un signal à partir d'un capteur autre que l'appareil et transmettre le signal au processeur, et le processeur (1001) est configuré pour mettre en œuvre le procédé selon l'une quelconque des revendications 1 à 10 à l'aide d'un circuit logique ou en exécutant des instructions de code.

**12.** Support de stockage lisible par ordinateur, comprenant un programme ou des instructions, dans lequel lorsque le programme ou les instructions sont exécutés par un ordinateur, le procédé selon l'une quelconque des revendications 1 à 10 est réalisé.

**13.** Terminal, comprenant l'appareil selon la revendication 11.

**14.** Terminal selon la revendication 13, dans lequel le terminal est le véhicule.

Sensor 01
Sensor 02

bb
aa

FIG. 1

Distance
width
Sensor 01
Distance
width
bb
aa

FIG. 2

S301
Obtain first point cloud data
S302
Decompose the first point cloud data into a first direction, to obtain first data
S303
Determine a type of a target based on the first data

FIG. 3

Radar
P1 (x1, y1)
0
X
P2 (x2, y2)
Y
☆ indicates a detection point

FIG. 4A

Z
Radar
P1 (x1, y1, z1)
X
0
P2 (x2, y2, z2)
Y

FIG. 4B

Y
v
θ
P4
P2
y4
y2
y3
y1
P3
P1
x2
x4
x1
x2
X
Y
F
P2'
P4'
f2
P1'
f4
P3'
0
f1
f3
X

indicates a target ● indicates a weighting-energy centroid of the target

◆ indicates a location of coordinates of a detection point in a radar coordinate system

▲ indicates a location of projection coordinates of the detection point in a first coordinate system

FIG. 5A

Y
v
P4
P3
P2
P1
X
Z
Y
F
P2'
P4'
0
P1'
P3'
X
Z

indicates a target

◆ indicates a location of coordinates of a detection point in a radar coordinate system

▲ indicates a location of projection coordinates of the detection point in a first coordinate system

FIG. 5B

Y
X
y2
x2
v
θ
P1
P2
P3
P4
F
G
f2
g2
0
P1'
P2'
P3'
P4'
indicates a target
indicates a location of coordinates of a detection point in a radar coordinate system
indicates a location of projection coordinates of the detection point in a first coordinate system

FIG. 5C

Y
v
θ
P4
P3
P2
P1
X
Y
F
P2'
3
2
P4'
1
0
−1
−2
X
indicates a target
indicates a weighting-energy centroid of the target
indicates a location of coordinates of a detection point in a radar coordinate system
indicates a location of projection coordinates of the detection point in a first coordinate system

FIG. 6

One-dimensional RCS distribution
Car
−15 −10 −5 0 5 10 15
Truck
−15 −10 −5 0 5 10 15
Bus
−15 −10 −5 0 5 10 15
Distance from a centroid/m

FIG. 7A

RCS distribution entropy
5.0
4.5
4.0
3.5
3.0
Car
Truck
Bus

FIG. 7B

One-dimensional RCS distribution
Pedestrian
–15
–10
–5
0
5
10
15
Car
–15
–10
–5
0
5
10
15
Motorcycle
–15
–10
–5
0
5
10
15
Distance from a centroid/m

FIG. 8A

Standard deviation of time domain fluctuation
6
5
4
3
2
1
0
−1
Pedestrian
Car
Motorcycle

FIG. 8B

Obtaining module
901
Processing module
902

FIG. 9

Processor
1001
Interface circuit
1002

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2022050461 A1


### Non-patent literature cited in the description


- **ASENSIO LOPEZ ALBERTO et al.** On the Use of Glint-Doppler-Azimuth Correlation for Speed Estimation of Nearby Tangential Targets. *IEEE Transactions on intelligent transportation systems*, 07 November 2019, vol. 21 (11), 4912-4918